# EUROPÄISCHE PATENTSCHRIFT

(11) **EP 3 670 045 B1**
(45) Veröffentlichungstag und Bekanntmachung des Hinweises auf die Patenterteilung: **01.10.2025**
(21) Anmeldenummer: 18214184.6
(22) Anmeldetag: 19.12.2018
(51) Int. Cl.: B23B 31/117, B23B 31/30, B23Q 5/26

(54) **HYDRODEHNSPANNFUTTER SOWIE BOHRVORSCHUBEINHEIT**
HYDRAULIC EXPANSION CHUCK AND DRILL FEED UNIT
MANDRIN DE SERRAGE À EXTENSION HYDRAULIQUE AINSI QU'UNITÉ D'AVANCE DU FORAGE

(43) Veröffentlichungstag der Anmeldung: 24.06.2020
(73) Patentinhaber: MAPAL Dr. Kress SE & Co. KG, 73431 Aalen (DE)
(72) Erfinder: KRESS, Jochen, 73430 Aalen (DE)
(74) Vertreter: Kordel, Mattias

(56) Entgegenhaltungen:
- EP-A1- 1 649 956
- EP-A1- 2 985 099
- DE-A1- 2 007 813
- GB-A- 833 048
- US-A- 3 039 443
- US-A- 3 679 219
- US-A- 4 752 161

## Beschreibung

Die Erfindung betrifft ein Hydrodehnspannfutter sowie eine Bohrvorschubeinheit.

Bei Werkzeuganwendungen, bei denen nur ein geringer Bauraum für die Aufnahme oder Anordnung eines Werkzeugs an einer Werkzeughalterung vorhanden ist, besteht grundsätzlich das Problem eines einfachen und kostengünstigen Werkzeugwechsels. In der Regel sind bei solchen Anwendungen spezifisch eingerichtete Adapterstücke vorgesehen, die unlösbar mit dem Werkzeug verbunden, beispielsweise auf das Werkzeug aufgeschrumpft werden. Wird das Werkzeug ausgewechselt, wird mit dem verschlissenen Werkzeug zugleich das unlösbar mit diesem verbundene Adapterstück entsorgt. Dies führt zum einen zu einem erhöhten Materialaufwand, zum anderen ist das stets neue unlösbare Verbinden von Adapterstücken mit Werkzeugen aufwändig, und es bedarf typischerweise zusätzlicher Teile und/oder Materialien, um die unlösbare Verbindung zu schaffen.

Ein Spannfutter gemäß dem Oberbegriff des Anspruchs 1 ist aus EP 1 649 956 A1 bekannt. Ein weiteres Spannfutter ist aus GB 833 048 A bekannt.

Diese Probleme ergeben sich in besonderer Weise in Zusammenhang mit Bohrvorschubeinheiten, wie sie beispielsweise zur Schaffung von Nietlochbohrungen im Flugzeugbau verwendet werden, und die eingerichtet sind, um einen Bohrer maschinell in Axialrichtung während eines Bohrvorgangs zu verlagern. Dabei stehen bei einer solchen Anwendung nur sehr beengte Bauräume für die mechanische Verbindung des Bohrers mit der Bohrvorschubeinheit zur Verfügung, wobei typischerweise auf Bohrer unlösbar aufgeschrumpfte Adapterstücke mit den zuvor genannten Nachteilen verwendet werden.

Es besteht somit Bedarf einerseits an einer Möglichkeit, Werkzeuge auch in beengten Bauräumen auswechselbar spannen zu können, sowie andererseits an einer Bohrvorschubeinheit, die ein verbessertes Auswechseln des Bohrers in vereinfachter und materialsparender sowie kostengünstiger Weise erlaubt.

Der Erfindung liegt demnach die Aufgabe zugrunde, ein Hydrodehnspannfutter sowie eine Bohrvorschubeinheit zu schaffen, wobei die genannten Nachteile gelindert oder vermieden werden.

Gemäß der Erfindung wird die Aufgabe gelöst, indem ein Hydrodehnspannfutter gemäß Anspruch 1 bereitgestellt wird, welches eine Spannaufnahme zum lösbaren Einspannen eines Werkzeugs aufweist. Weitere Ausgestaltungen ergeben sich aus den Unteransprüchen. Das Hydrodehnspannfutter weist senkrecht zu einer Längsachse des Hydrodehnspannfutters ein maximales Breitenmaß von mindestens 5 mm bis höchstens 40 mm, vorzugsweise von mindestens 7 mm bis höchstens 35 mm, vorzugsweise von mindestens 10 mm bis höchstens 30 mm, vorzugsweise von mindestens 15 mm bis höchstens 20 mm, auf. Auf diese Weise wird ein besonders kleines Hydrodehnspannfutter bereitgestellt, welches zum Spannen eines Werkzeugs auch bei beengten Bauräumen verwendet werden kann. Somit kann das Hydrodehnspannfutter insbesondere anstelle eines ansonsten unlösbar an dem Werkzeug zu befestigenden Adapterstücks verwendet werden.

Eine Längsachse des Hydrodehnspannfutters ist hier insbesondere eine Achse, die sich parallel zu einer bestimmungsgemäßen Längsachse eines in die Spannaufnahme einzuspannenden Werkzeugs im eingespannten Zustand erstreckt, wobei die Längsachse des Hydrodehnspannfutters vorzugsweise im eingespannten Zustand mit der Längsachse des Werkzeugs zusammenfällt. Alternativ oder zusätzlich ist die Längsachse des Hydrodehnspannfutters bevorzugt eine Achse der längsten Ausdehnung des Hydrodehnspannfutters.

Das maximale Breitenmaß wird demnach bevorzugt senkrecht zu einer Axialrichtung des in die Spannaufnahme lösbar eingespannten Werkzeugs gemessen.

Das maximale Breitenmaß ist insbesondere ein Maß größter Breite des Hydrodehnspannfutters senkrecht zu der Längsachse.

Insbesondere ist das maximale Breitenmaß bevorzugt ein Außendurchmesser des vorzugsweise zumindest bereichsweise zylindrisch, vorzugsweise zumindest bereichsweise kreiszylindrisch ausgebildeten Hydrodehnspannfutters.

Die im Folgenden in Zusammenhang mit bevorzugten Ausgestaltungen und Weiterbildungen der Erfindung beschriebenen konstruktiven Merkmale des Hydrodehnspannfutters sind auch unabhängig von den zuvor beschriebenen Abmessungen des Hydrodehnspannfutters bei erfindungsgemäß bevorzugten Ausführungsbeispielen des Hydrodehnspannfutters anwendbar. Besonders bevorzugt wird deren Kombination mit den zuvor beschriebenen Abmessungen.

In für sich genommen bekannter Weise weist das Hydrodehnspannfutter einen von einer Spannwandung umschlossenen Spannraum auf, der eingerichtet ist, um ein Werkzeug bereichsweise aufzunehmen, und das Werkzeug in dem Spannraum zu spannen. In der Spannwandung ist wenigstens eine Druckkammer ausgebildet, die vorzugsweise mit einem Druckfluid, insbesondere einem Drucköl, befüllbar oder befüllt ist. In einer ersten Funktionsstellung des Hydrodehnspannfutters liegt ein erster Druckwert in der wenigstens einen Druckkammer vor, wobei eine Innenfläche der Spannwandung bei dem ersten Druckwert elastisch in das Innere des Spannraums hinein verformt ist, sodass ein in dem Spannraum angeordnetes Werkzeug sicher und fest durch die verformte Innenfläche der Spannwandung gespannt wird. In einer zweiten Funktionsstellung des Hydrodehnspannfutters herrscht ein zweiter Druckwert in der wenigstens einen Druckkammer, wobei die Innenfläche der Spannwandung in der zweiten Funktionsstellung bei dem zweiten Druckwert nicht in den Spannraum hinein verformt ist, sondern insbesondere elastisch in einen Ruhezustand verlagert ist, in dem der Spannraum ein größeres Innenmaß, insbesondere einen größeren Innendurchmesser, aufweist, als wenn die Innenfläche der Spannwandung in der ersten Funktionsstellung in den Spannraum hinein verformt ist. Der zweite Druckwert ist dabei kleiner als der erste Druckwert. In der zweiten Funktionsstellung kann das Werkzeug aus dem Spannraum entnommen oder ein neues Werkzeug in den Spannraum hineinverlagert werden. Das Werkzeug ist demnach in der zweiten Funktionsstellung gelöst. Das Hydrodehnspannfutter ist dabei reversibel von der ersten Funktionsstellung in die zweite Funktionsstellung - und umgekehrt - verlagerbar.

Das Hydrodehnspannfutter ist insbesondere eingerichtet zur Verwendung als Wechselspannfutter einer erfindungsgemäßen Bohrvorschubeinheit oder einer Bohrvorschubeinheit nach einer der in Übereinstimmung mit der vorliegenden technischen Lehre offenbarten Ausführungsformen.

Insbesondere ist die Spannaufnahme eingerichtet zum lösbaren Einspannen eines Bohrers, vorzugsweise für eine solche Bohrvorschubeinheit.

Gemäß der Erfindung ist vorgesehen, dass das Hydrodehnspannfutter der Spannaufnahme entlang der Längsachse abgewandt ein Verbindungsstück zur mechanischen Verbindung mit einer Aufnahme für das Hydrodehnspannfutter sowie außerdem eine Zentrierfläche aufweist, wobei die Zentrierfläche radial nach außen versetzt zu dem Verbindungsstück angeordnet ist. Auf diese Weise kann das Hydrodehnspannfutter einfach, sicher, reproduzierbar und stabil mit einer Aufnahme für das Hydrodehnspannfutter, insbesondere mit einer Bohreraufnahme und ganz besonders mit einer Zwischenstückaufnahme einer Bohrvorschubeinheit, insbesondere einer erfindungsgemäßen Bohrvorschubeinheit oder einer Bohrvorschubeinheit nach einer der in Übereinstimmung mit der vorliegenden technischen Lehre offenbarten Ausführungsformen, verbunden werden. Dabei ermöglicht das Verbindungsstück die mechanische Verbindung, wobei die Zentrierfläche zugleich eine Zentrierung und axiale Ausrichtung des Hydrodehnspannfutters relativ zu der Aufnahme ermöglicht. Insbesondere kann so gewährleistet werden, dass die Längsachse des Hydrodehnspannfutters mit der Axialrichtung der Aufnahme, insbesondere mit der Axialrichtung der Bohrvorschubeinheit, fluchtet oder zusammenfällt.

Die Aufnahme weist vorzugsweise eine Gegenzentrierfläche auf. Insbesondere weist die Zwischenstückaufnahme bevorzugt eine Gegenzentrierfläche auf. Im an der Aufnahme befestigten Zustand des Hydrodehnspannfutters liegt die Zentrierfläche insbesondere vollflächig an der Gegenzentrierfläche an, sodass das Hydrodehnspannfutter an oder in der Aufnahme zentriert ist. Dabei trägt in besonders günstiger Weise zu einer stabilen und reproduzierbaren Zentrierung bei, dass die Zentrierfläche radial nach außen versetzt zu dem Verbindungsstück angeordnet ist.

Bevorzugt ist die Zentrierfläche auch axial zu der Spannaufnahme hin versetzt von dem Verbindungsstück angeordnet. Insbesondere eilt sie in Montagerichtung dem Verbindungsstück nach, sodass bei einem Montagevorgang zunächst das Verbindungsstück mit der Aufnahme in Eingriff tritt und zuletzt die Zentrierfläche mit der Gegenfläche in Kontakt kommt.

Gemäß einer Weiterbildung der Erfindung ist vorgesehen, dass das Verbindungsstück als Gewindeverbinder ausgebildet ist. Besonders bevorzugt ist der Gewindeverbinder als Zylinderstutzen mit Innengewinde, oder aber in besonders bevorzugter Weise als Gewindestutzen mit Außengewinde ausgebildet.. Es versteht sich, dass der als Zylinderstutzen ausgebildete Gewindeverbinder nicht notwendig eine kreiszylindrische Geometrie aufweisen muss. Vielmehr kann die Grundform des Zylinders auch von der Kreisgeometrie abweichen, beispielsweise eine polygonale oder beliebige andere Geometrie haben. Somit wird der Begriff "Zylinder" hier in seiner allgemeinsten Form für die Extrusion eines beliebigen flächigen Profils entlang einer Extrusionsachse verwendet. Die Extrusionsachse steht allerdings bevorzugt senkrecht auf einer Profilebene des Profils.

Erfindungsgemäß ist die Zentrierfläche als Kegelstumpffläche, insbesondere als Außenkegelstumpffläche, ausgebildet.

Die Gegenzentrierfläche, insbesondere die Gegenzentrierfläche der Bohrvorschubeinheit, ist bevorzugt als Kegelstumpffläche, insbesondere als Innenkegelstumpffläche ausgebildet. Insbesondere sind die Zentrierfläche und die Gegenzentrierfläche komplementär zueinander ausgebildet, sodass sie in montiertem Zustand des Hydrodehnspannfutters an der Aufnahme vollflächig aneinander anliegen und zusammenwirken können.

Gemäß der Erfindung ist vorgesehen, dass die mindestens eine Druckkammer mit wenigstens einem Druckzylinder strömungstechnisch verbunden ist, wobei eine Zylinderlängsachse des wenigstens einen Druckzylinders mit der Längsachse des Hydrodehnspannfutters einen Winkel einschließt, der von mindestens 0° bis höchstens 3°, vorzugsweise von mindestens 1° bis höchstens 2°, vorzugsweise 1,5° beträgt. Dies ermöglicht insbesondere die miniaturisierte, sehr kleine Ausgestaltung des Hydrodehnspannfutters, da der Druckzylinder in platzsparender Weise parallel zu der Längsachse oder in einem kleinen spitzen Winkel zu der Längsachse des Hydrodehnspannfutters angeordnet ist und damit - in radialer Richtung - sehr nah an der Längsachse in das Hydrodehnspannfutter integriert sein kann. Bei herkömmlichen, größeren Hydrodehnspannfuttern weist eine Zylinderlängsachse eines Druckzylinders typischerweise einen viel größeren Winkel zu der Längsachse des Hydrodehnspannfutters auf, wobei die Zylinderlängsachse des Druckzylinders insbesondere senkrecht auf der Längsachse des Hydrodehnspannfutters stehen kann. Dies erfordert einen deutlich größeren Bauraum.

In dem wenigstens einen Druckzylinder ist vorzugsweise ein Druckkolben verlagerbar angeordnet. Durch Verlagerung des Druckkolbens in dem Druckzylinder kann das für das Druckfluid zur Verfügung stehende Volumen verändert werden, sodass das Druckfluid in der ersten Funktionsstellung unter Druck gesetzt und in der zweiten Funktionsstellung relativ zu der ersten Funktionsstellung entspannt werden kann. Der erste Druckwert und der zweite Druckwert können also insbesondere durch geeignete Verlagerung des Druckkolbens in dem Druckzylinder bereitgestellt werden, wobei der Druckkolben in dem Druckzylinder in der ersten Funktionsstellung ein kleineres Volumen für das Druckfluid freilässt, mithin in den Druckzylinder hinein verlagert ist, wobei er in der zweiten Funktionsstellung ein größeres Volumen für das Druckfluid freigibt, mithin eine bestimmte Distanz aus dem Druckzylinder heraus oder in dem Druckzylinder von der Druckkammer weg verlagert ist.

Gemäß der Erfindung ist vorgesehen, dass dem wenigstens einen Druckzylinder eine Druckschraubbohrung zugeordnet ist. Dabei ist eine Bohrungslängsachse der Druckschraubbohrung parallel zur Zylinderlängsachse des Druckzylinders ausgerichtet. Dies ermöglicht eine besonders einfache Betätigung des Druckkolbens in dem Druckzylinder über die Druckschraubbohrung.

Alternativ oder zusätzlich ist vorgesehen, dass die Bohrungslängsachse der Druckschraubbohrung senkrecht zu der Zylinderlängsachse von der Zylinderlängsachse versetzt angeordnet ist. Die Bohrungslängsachse der Druckschraubbohrung fluchtet also nicht mit der Zylinderlängsachse, sondern ist vielmehr senkrecht zu dieser versetzt, insbesondere parallelversetzt. Insbesondere diese Ausgestaltung ermöglicht einen besonders kleinen Bauraum für das Hydrodehnspannfutter. Die Druckschraubbohrung weist einen größeren Durchmesser auf als der Druckzylinder, sodass sie senkrecht zu der Längsachse oder Zylinderlängsachse einen vergleichsweise großen Bauraum einnimmt.

Die Bohrungslängsachse der Druckschraubbohrung ist insbesondere radial nach innen zur Längsachse des Hydrodehnspannfutters hin relativ zu der Zylinderlängsachse versetzt angeordnet, sodass im Ergebnis die Druckschraubbohrung radial nach außen höchstens ein geringes Aufmaß relativ zu einer äußersten Position des Druckzylinders aufweisen kann.

Die Druckschraubbohrung ist insbesondere eingerichtet zur Aufnahme einer Druckschraube, die wiederum zur Druckbeeinflussung des Drucks in dem Druckzylinder und damit zugleich in der wenigstens einen Druckkammer eingerichtet ist. Insbesondere ist die Druckschraubbohrung mit dem Druckzylinder wirkverbunden; besonders bevorzugt ist die Druckschraube mit dem Druckkolben zu dessen Betätigung wirkverbunden. Insbesondere ist die Druckschraube mit dem Druckkolben in berührendem Kontakt, sodass der Druckkolben durch Verlagern der Druckschraube, insbesondere durch Ein- und/oder Ausschrauben der Druckschraube aus der Druckschraubbohrung oder in diese hinein, in dem Druckzylinder verlagert werden kann.

Die Druckschraube ist bevorzugt als Madenschraube ausgebildet. Sie weist bevorzugt einen Betätigungseingriff auf, über den ein Drehmoment in die Druckschraube eingeleitet werden kann. Der Betätigungseingriff ist in bevorzugter Ausgestaltung als Innensechskant ausgebildet.

Gemäß einer Weiterbildung der Erfindung ist vorgesehen, dass die Druckkammer mit einer Mehrzahl von Druckzylindern strömungstechnisch verbunden ist. Dies ermöglicht eine weitere Verkleinerung des Hydrodehnspannfutters. Typischerweise bedarf es nämlich eines gewissen Verlagerungswegs des Druckkolbens in dem Druckzylinder, um eine zum stabilen und festen Einspannen des Werkzeugs in dem Spannraum ausreichende Volumenverdrängung zu bewirken. Soll diese Volumenverdrängung durch nur einen Druckzylinder bewirkt werden, bedingt dies eine gewisse Mindestbaulänge für den Druckzylinder in axialer Richtung. Wird dagegen eine Mehrzahl von Druckzylindern vorgesehen, die strömungstechnisch mit derselben Druckkammer verbunden sind, tragen die verschiedenen Druckzylinder gemeinsam zu der Volumenverdrängung bei, sodass jeder einzelne Druckzylinder kürzer bauen kann, weil ein entsprechend verringerter Verlagerungsweg für die einzelnen Druckkolben vorgehalten werden muss. Das Hydrodehnspannfutter kann somit in Axialrichtung kleiner bauen.

Gemäß einer Weiterbildung der Erfindung ist vorgesehen, dass die wenigstens eine Druckschraubbohrung in die Zentrierfläche mündet. Somit kann die Zentrierfläche in vorteilhafter und insbesondere bauraumsparender Weise zugleich zum einen zum Zentrieren des Hydrodehnspannfutters und zum anderen zur Betätigung der wenigstens einen Druckschraube in der wenigstens einen Druckschraubbohrung verwendet werden.

Gemäß einer bevorzugten Ausgestaltung weist das Hydrodehnspannfutter wenigstens zwei Druckzylinder, insbesondere genau zwei Druckzylinder, oder genau drei Druckzylinder, auf. Diese können symmetrisch entlang einer Umfangslinie verteilt an dem Hydrodehnspannfutter vorgesehen sein. Es ist aber auch möglich, dass das Hydrodehnspannfutter zusätzlich wenigstens eine, bevorzugt genau eine, Wuchtbohrung aufweist, vorzugsweise sind dann die Druckzylinder sowie Druckschraubbohrungen zusammen mit der Wuchtbohrung symmetrisch entlang der Umfangslinie angeordnet, insbesondere in gleichen Winkelabständen zueinander. Insbesondere ist es möglich, dass drei Druckschraubbohrungen/Druckzylinder in einem Winkelabstand von jeweils 90° entlang der Umfangslinie angeordnet sind, wobei die Wuchtbohrung in dem sich derart ergebenden, vierten Quadranten, in einem Winkelabstand von jeweils 90° zu den ihr unmittelbar benachbarten Druckschraubbohrungen/Druckzylindern angeordnet ist.

Gemäß einer Weiterbildung der Erfindung ist vorgesehen, dass das Hydrodehnspannfutter wenigstens zwei Schlüsselflächen zur Einleitung eines Drehmoments in das Hydrodehnspannfutter aufweist, wobei die Schlüsselflächen bevorzugt an einer äußeren Umfangswandung des Hydrodehnspannfutters, insbesondere im Bereich der Spannaufnahme, ausgebildet sind. An den Schlüsselflächen kann ein Werkzeug, insbesondere ein Schraubschlüssel, angreifen, um das Hydrodehnspannfutter mit dem Verbindungsstück, insbesondere dem Gewindeverbinder, in eine Aufnahme einzuschrauben oder an die Aufnahme anzuschrauben. Besonders bevorzugt sind sechs Schlüsselflächen in Form eines Außensechskants vorgesehen, insbesondere an demjenigen Ende des Hydrodehnspannfutters, an welchem die Spannaufnahme vorgesehen ist, mithin dem Verbindungsstück entlang der Längsachse gegenüberliegend.

Gemäß einer bevorzugten Ausgestaltung ist das Hydrogenspannfutter additiv gefertigt, insbesondere durch 3D-Druck, insbesondere mittels pulverbettbasiertem, schichtweisen Schmelzens eines Metallpulvers, insbesondere mittels Laserstrahlung, insbesondere durch Lasersintern oder Laser-Strahlschmelzen. Auf diese Weise kann das Hydrodehnspannfutter in einfacher Weise trotz seiner vergleichsweise komplexen Geometrie einstückig gefertigt werden.

Vorzugsweise weist das Hydrodehnspannfutter an der Spannaufnahme, insbesondere an einer Mündung des Spannraums, eine Einführfase oder Einführrundung auf. Diese dient einem erleichterten Einführen eines Werkzeugs, insbesondere eines Bohrers, in den Spannraum.

Vorzugsweise ist eine Umfangsfläche des Hydrodehnspannfutters zumindest bereichsweise zylindrisch, insbesondere kreiszylindrisch, ausgebildet. Besonders bevorzugt ist das Hydrodehnspannfutter insgesamt kreiszylindrisch ausgebildet, vorzugsweise mit Ausnahme der Zentrierfläche, des Verbindungsstücks und/oder der Schlüsselflächen. Insbesondere ist das Hydrodehnspannfutter von der Zentrierfläche bis zu den Schlüsselflächen - in Längsrichtung gesehen - bezüglich der äußeren Umfangsfläche kreiszylindrisch ausgebildet, weist also eine vollzylindrische, kreiszylindrische Umfangsfläche auf. Dies stellt eine insbesondere für beengte Bauräume besonders günstige Geometrie dar.

Weiter gemäß der Erfindung wird die Aufgabe gelöst, indem eine Bohrvorschubeinheit gemäß Anspruch 7 bereitgestellt wird. Weitere Ausgestaltungen ergeben sich aus den weiteren Unteransprüchen.

Die Bohrvorschubeinheit weist eine Bohreraufnahme auf, die eingerichtet ist zum Befestigen eines Bohrers an der Bohrvorschubeinheit. Die Bohrvorschubeinheit weist außerdem eine Vorschubeinrichtung auf, die eingerichtet ist zur maschinellen Verlagerung der Bohreraufnahme relativ zu einem Gehäuse der Bohrvorschubeinheit in Axialrichtung. Dabei weist die Bohreraufnahme ein Wechselspannfutter auf, das eingerichtet ist zur lösbaren Befestigung - d.h. zum Einspannen insbesondere eines zylindrischen Bohrerschafts - des Bohrers an dem Wechselspannfutter. Mithilfe des Wechselspannfutters ist es möglich, den Bohrer in einfacher und kostengünstiger Weise zu wechseln, wobei es weder zusätzlicher aufwändiger und teilweise teurer Materialien und/oder Werkzeuge für den Bohrerwechsel bedarf, noch ein unlösbar mit dem Bohrer verbundenes Adapterstück vorgesehen sein muss, welches mit diesem zusammen entsorgt würde. Vielmehr kann der Bohrer in einfacher Weise aus dem Wechselspannfutter entnommen werden, wobei ein neuer Bohrer in das Wechselspannfutter eingespannt werden kann.

Die Bohreraufnahme ist insbesondere eingerichtet zum mitnehmbaren Befestigen des Bohrers an der Bohrvorschubeinheit, wobei der Bohrer zugleich mit der Bohreraufnahme relativ zu dem Gehäuse maschinell verlagert werden kann. Auf diese Weise wird der Bohrer durch die Vorschubeinrichtung in Axialrichtung vorgeschoben.

Die Bohreraufnahme ist insbesondere eingerichtet zur mittelbaren Befestigung des Bohrers an der Bohrvorschubeinheit, wobei dann die Bohreraufnahme nicht selbst als Wechselspannfutter ausgebildet ist, sondern eingerichtet ist zur Befestigung des Wechselspannfutters an der Bohreraufnahme. Es ist aber auch möglich, dass die Bohreraufnahme selbst als Wechselspannfutter ausgebildet ist, wobei sie in diesem Fall eingerichtet ist zum unmittelbaren Befestigen des Bohrers an der Bohrvorschubeinheit.

Unter einer Axialrichtung wird hier insbesondere eine Richtung verstanden, die sich entlang einer Längsrichtung des Bohrers und insbesondere entlang einer Vorschubrichtung erstreckt, welche durch die Vorschubeinrichtung und durch die bestimmungsgemäße Verlagerung der Bohreraufnahme relativ zu dem Gehäuse definiert ist, die durch die Vorschubeinrichtung bewirkbar ist. Zum Ausführen einer Bohrung wird der Bohrer in für sich genommen bekannter Weise um seine Längsachse rotiert und entlang seiner Längsachse, also in Axialrichtung, verlagert. Eine radiale Richtung steht senkrecht auf der Axialrichtung, eine Umfangsrichtung umgreift die Axialrichtung konzentrisch.

Das Gehäuse nimmt bevorzugt die Bohreraufnahme auf. Alternativ oder zusätzlich nimmt das Gehäuse die Vorschubeinrichtung auf. Insbesondere umgreift das Gehäuse bevorzugt die Bohreraufnahme und/oder die Vorschubeinrichtung zumindest bereichsweise.

Gemäß einer Weiterbildung der Erfindung ist vorgesehen, dass die Bohreraufnahme eine Zwischenstückaufnahme und ein Zwischenstück aufweist, wobei das Zwischenstück eingerichtet ist, um mechanisch einenends, das heißt an einem ersten Ende, mit der Zwischenstückaufnahme und anderenends, das heißt an einem zweiten, dem ersten Ende entlang einer Längsachse des Zwischenstücks, vorzugsweise in Axialrichtung, gegenüberliegenden Ende, mit einem Bohrer verbunden zu werden. Dabei ist das Zwischenstück das Wechselspannfutter der Bohrvorschubeinheit zur lösbaren Befestigung - insbesondere zum Einspannen insbesondere eines zylindrischen Bohrerschafts - des Bohrers. In diesem Fall ist die Bohreraufnahme also eingerichtet, um den Bohrer mittelbar an der Bohrvorschubeinheit zu befestigen, wobei die Zwischenstückaufnahme eingerichtet ist zur Befestigung des Zwischenstücks an der Zwischenstückaufnahme, wobei das Zwischenstück wiederum als Wechselspannfutter eingerichtet ist, um den Bohrer lösbar zu spannen. Insbesondere ist das Zwischenstück eingerichtet, um einenends an der Zwischenstückaufnahme befestigt zu werden, und um anderenends den Bohrer an dem Zwischenstück zu befestigen. Das Zwischenstück ist insbesondere an dem zweiten Ende als Wechselspannfutter ausgebildet.

In besonders einfacher Weise kann dann zum Auswechseln des Bohrers insbesondere zunächst das Zwischenstück von der Zwischenstückaufnahme getrennt werden und anschließend der Bohrer aus dem Zwischenstück gelöst werden. Dann kann ein neuer Bohrer in das als Wechselspannfutter ausgebildete Zwischenstück eingespannt werden, wonach das Zwischenstück wieder an der Zwischenstückaufnahme befestigt wird. Dies ermöglicht es insbesondere, das Zwischenstück zum Wechseln des Bohrers aus der Zwischenstückaufnahme und damit der Bohreraufnahme zu entnehmen, und so mehr Raum zur Betätigung des Wechselspannfutters zur Verfügung zu haben. Ein Verwender der Bohrvorschubeinheit muss also nicht in dem beengten Bauraum des Bereichs der Bohreraufnahme arbeiten, um den Bohrer zu wechseln. Zugleich stellt das Zwischenstück ein Adapterstück dar, welches nicht gemeinsam mit einem verschlissenen Bohrer entsorgt werden muss, sondern vielmehr wiederverwendet wird, indem ein verschlissener Bohrer aus dem Wechselspannfutter ausgespannt und ein neuer Bohrer in das Wechselspannfutter eingespannt wird.

Gemäß einer Weiterbildung der Erfindung ist vorgesehen, dass das Zwischenstück einenends, insbesondere an dem ersten Ende, ein Verbindungsstück aufweist, das eingerichtet ist zum mechanischen Verbinden des Zwischenstücks mit der Zwischenstückaufnahme. Anderenends, insbesondere an dem zweiten Ende, weist das Zwischenstück eine Spannaufnahme zum lösbaren Einspannen des Bohrers auf. Auf diese Weise ist es an dem zweiten Ende als Wechselspannfutter ausgebildet.

Gemäß einer bevorzugten Ausgestaltung ist das Verbindungsstück als Gewindeverbinder ausgebildet, der eingerichtet ist zum Anschrauben des Zwischenstücks an die Zwischenstückaufnahme.

Der Gewindeverbinder an dem ersten Ende ermöglicht ein besonders einfaches Verbinden des Zwischenstücks mit der Zwischenstückaufnahme durch Anschrauben oder Einschrauben.

Vorzugsweise ist der Gewindeverbinder als Zylinderstutzen mit einem Innengewinde ausgebildet, oder in besonders bevorzugter Weise als Gewindestutzen mit einem Außengewinde. Die Zwischenstückaufnahme weist entsprechen entweder ein komplementäres Außengewinde zum Einschrauben in den Zylinderstutzen mit Innengewinde, oder aber ein komplementäres Innengewinde zum Einschrauben des Gewindestutzens mit Außengewinde auf. Es versteht sich, dass der als Zylinderstutzen ausgebildete Gewindeverbinder nicht notwendig eine kreiszylindrische Geometrie aufweisen muss. Vielmehr kann die Grundform des Zylinders auch von der Kreisgeometrie abweichen, beispielsweise eine polygonale oder beliebige andere Geometrie haben. Somit wird der Begriff "Zylinder" hier in seiner allgemeinsten Form für die Extrusion eines beliebigen flächigen Profils entlang einer Extrusionsachse verwendet. Die Extrusionsachse steht allerdings bevorzugt senkrecht auf einer Profilebene des Profils.

Gemäß einer Weiterbildung der Erfindung ist vorgesehen, dass das Wechselspannfutter ausgewählt ist aus einer Gruppe, bestehend aus einem Hydrodehnspannfutter, einer Spannzange, einem Polygonspannfutter, und einem Flächenspannfutter. Alle diese Spannfutter sind zur lösbaren Befestigung eines Bohrers geeignet. Ein geeignetes Ausführungsbeispiel eines Hydrodehnspannfutters ist gemäß der vorliegenden technischen Lehre näher beschrieben. Ein als Spannzange ausgebildetes Wechselspannfutter weist bevorzugt in radialer Richtung elastische Spannzungen auf, die durch eine Spannkappe oder Spannmutter wahlweise in eine Spannstellung und in eine Freigabestellung verlagert werden können. Ein Polygonspannfutter weist eine polygonale Geometrie auf, die durch Applikation eines äußeren Drucks oder einer äußeren Kraft aufgeweitet werden kann, um ein Werkzeug aus dem Spannfutter zu lösen oder ein neues Werkzeug in das Spannfutter einzusetzen, wobei ein Entfernen des äußeren Drucks oder der äußeren Kraft bewirkt, dass das Polygonspannfutter in eine Spannkonfiguration zurückkehrt, in der das Werkzeug in dem Polygonspannfutter eingespannt ist. Ein Flächenspannfutter weist insbesondere einen Spannstift oder eine Spannschraube auf, der/die in einer Spannstellung mit einer Spannfläche eines Werkzeugs zusammenwirkt, um das Werkzeug in dem Flächenspannfutter einzuspannen, wobei das Werkzeug durch Verlagern des Spannstifts oder der Spannschraube in eine Lösestellung aus dem Flächenspannfutter gelöst werden kann.

Gemäß einer Weiterbildung der Erfindung ist vorgesehen, dass die Bohreraufnahme zumindest bereichsweise in einem Gehäuseabschnitt des Gehäuses angeordnet ist. Die Bohreraufnahme ist also in dem Gehäuse innenliegend angeordnet, sodass hier nur ein sehr beengter Bauraum für die Befestigung des Bohrers zur Verfügung steht. Der Gehäuseabschnitt ist vorzugsweise ein distaler Gehäuseabschnitt, das heißt ein Gehäuseabschnitt, der einem zu bearbeitenden Werkstück bestimmungsgemäß zugewandt ist. Vorzugsweise ist die Bohreraufnahme in dem Gehäuseabschnitt und relativ zu dem Gehäuseabschnitt verlagerbar.

Vorzugsweise ist die Bohreraufnahme mit der Zwischenstückaufnahme und bevorzugt auch mit dem Zwischenstück in dem Gehäuseabschnitt zumindest bereichsweise angeordnet. Besonders bevorzugt ist die Bohreraufnahme mit der Zwischenstückaufnahme, dem Zwischenstück und dem Bohrer zumindest bereichsweise in dem Gehäuseabschnitt angeordnet.

Gemäß einer Weiterbildung der Erfindung ist vorgesehen, dass das Wechselspannfutter, insbesondere das Zwischenstück, ein maximales Breitenmaß aufweist, das von mindestens 5 mm bis höchstens 40 mm, vorzugsweise von mindestens 7 mm bis höchstens 35 mm, vorzugsweise von mindestens 10 mm bis höchstens 30 mm, vorzugsweise von mindestens 15 mm bis höchstens 20 mm beträgt. Somit ist das Wechselspannfutter - insbesondere relativ zu den Abmessungen bekannter Wechselspannfutter - sehr klein ausgebildet und geeignet zur Verwendung in sehr beengten Bauräumen, insbesondere in einer Bohrvorschubeinheit. Das Breitenmaß wird insbesondere senkrecht zu der Axialrichtung gemessen. Unter einem maximalen Breitenmaß ist dabei die größte Ausdehnung des Wechselspannfutters senkrecht zu der Axialrichtung zu verstehen. Das maximale Breitenmaß ist besonders bevorzugt ein maximaler Außendurchmesser des bevorzugt zumindest bereichsweise zylindersymmetrischen, vorzugsweise kreiszylindrischen Wechselspannfutters.

Gemäß einer Weiterbildung der Erfindung ist vorgesehen, dass der Gehäuseabschnitt mit einem Obergehäuse trennbar verbunden ist, wobei der Gehäuseabschnitt von dem Obergehäuse getrennt werden kann, um den Bohrer auszuwechseln. Das Trennen des Gehäuseabschnitts von dem Obergehäuse ermöglicht einen Zugriff auf die Bohreraufnahme und damit insbesondere ein Auswechseln des Bohrers aus der Bohreraufnahme. Insbesondere ermöglicht das Trennen des Gehäuseabschnitts von dem Obergehäuse einen Zugriff auf die Zwischenstückaufnahme und das Zwischenstück, um das Zwischenstück von der Zwischenstückaufnahme zu trennen. Nach dem Auswechseln des Bohrers an dem Zwischenstück, kann das Zwischenstück erneut mit der Zwischenstückaufnahme verbunden werden, wonach der Gehäuseabschnitt wieder mit dem Obergehäuse verbunden werden kann.

Vorzugsweise ist die Vorschubeinrichtung in dem Obergehäuse angeordnet und verbleibt während des Auswechselns des Bohrers in dem Obergehäuse.

Gemäß der Erfindung ist vorgesehen, dass das Wechselspannfutter, insbesondere das Zwischenstück, ausgebildet ist als erfindungsgemäßes Hydrodehnspannfutter.

Dabei verwirklichen sich in besonderer Weise die hier beschriebenen Vorteile.

Ein Verfahren zum Wechseln eines Bohrers an einer Bohrvorschubeinheit weist folgende Schritte auf: Ein erster Bohrer wird aus einem Wechselspannfutter der Bohrvorschubeinheit gelöst, und ein zweiter Bohrer wird in das Wechselspannfutter der Bohrvorschubeinheit eingespannt. Mithilfe des Verfahrens ist ein einfacher, schneller und kostengünstiger Wechsel eines Bohrers an einer Bohrvorschubeinheit möglich, insbesondere ohne dass ein Adapterstück gemeinsam mit dem Bohrer entsorgt werden muss.

Im Rahmen des Verfahrens wird bevorzugt eine erfindungsgemäße Bohrvorschubeinheit verwendet.

Im Rahmen des Verfahrens wird als Wechselspannfutter bevorzugt ein erfindungsgemäßes Hydrodehnspannfutter verwendet. Zunächst wird ein als Wechselspannfutter ausgebildetes Zwischenstück gemeinsam mit dem ersten Bohrer von einer Zwischenstückaufnahme demontiert, wobei anschließend in von der Zwischenstückaufnahme getrenntem Zustand des Zwischenstücks der erste Bohrer von dem Zwischenstück gelöst wird. Anschließend wird zunächst der zweite Bohrer in das Zwischenstück eingespannt, wobei danach das Zwischenstück - mit dem zweiten Bohrer - wieder mit der Zwischenstückaufnahme mechanisch verbunden wird.

Bevorzugt wird zunächst ein das Zwischenstück umgreifender Gehäuseabschnitt der Bohrvorschubeinheit von einem Obergehäuse getrennt, wobei das Zwischenstück zugänglich wird. Das Zwischenstück wird dann gemeinsam mit dem ersten Bohrer von der Zwischenstückaufnahme demontiert. Anschließend wird der erste Bohrer aus dem Zwischenstück gelöst. Anschließend wird der zweite Bohrer in das Zwischenstück eingespannt, und danach wird das Zwischenstück - mit dem zweiten Bohrer - wieder an der Zwischenstückaufnahme befestigt. Schließlich wird der Gehäuseabschnitt wieder mit dem Obergehäuse verbunden.

Die Demontage des Zwischenstücks schließt insbesondere ein Ausschrauben des Zwischenstücks aus der Zwischenstückaufnahme oder ein Abschrauben des Zwischenstücks von der Zwischenstückaufnahme ein. Das mechanische Verbinden des Zwischenstücks mit der Zwischenstückaufnahme schließt insbesondere ein Einschrauben oder Anschrauben des Zwischenstücks in oder an die Zwischenstückaufnahme ein.

Indem das insbesondere als Hydrodehnspannfutter ausgebildete Zwischenstück von der Zwischenstückaufnahme getrennt wird, wird in bevorzugter Ausgestaltung der Spannmechanismus zugänglich; insbesondere kann ein Spannwerkzeug, beispielsweise ein Sechskantschlüssel, in die wenigstens eine Druckschraube eingreifen, insbesondere wenn diese in die Zentrierfläche mündet, wobei die Zentrierfläche und damit die Druckschraubbohrung in dem von der Zwischenstückaufnahme demontierten Zustand des Zwischenstücks zugänglich wird.

Die Erfindung wird im Folgenden anhand der Zeichnung näher erläutert. Dabei zeigen:
- Figur 1: eine Darstellung eines Beispiels einer Bohrvorschubeinheit gemäß dem Stand der Technik;
- Figur 2: eine Detaildarstellung eines erfindungsgemäßen Ausführungsbeispiels einer Bohrvorschubeinheit;
- Figur 3: eine Darstellung eines erfindungsgemäßen Ausführungsbeispiels eines Hydrodehnspannfutters im Längsschnitt;
- Figur 4: eine Seitenansicht des Hydrodehnspannfutters gemäß Figur 3;
- Figur 5: eine Ansicht des Hydrodehnspannfutters gemäß den Figuren 3 und 4 von unten, und
- Figur 6: eine dreidimensionale Darstellung des Hydrodehnspannfutters gemäß den Figuren 3 bis 5.

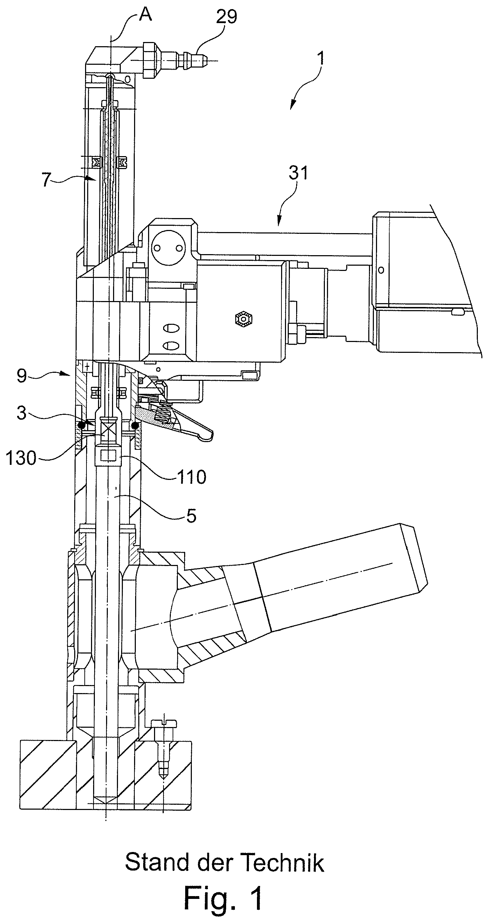

**Fig. 1** zeigt eine Darstellung eines Beispiels einer Bohrvorschubeinheit 1 gemäß dem Stand der Technik. Die Bohrvorschubeinheit 1 weist eine Bohreraufnahme 3 zum Befestigen eines Bohrers 5 an der Bohrvorschubeinheit 1 auf, sowie eine Vorschubeinrichtung 7, die eingerichtet ist zur maschinellen Verlagerung der Bohreraufnahme 3 relativ zu einem Gehäuse 9 der Bohrvorschubeinheit 1 in Axialrichtung, das heißt in Richtung einer Längsachse A.

Zum Verbinden des Bohrers 5 mit der Bohreraufnahme 3 ist hier ein Adapterstück 110 vorgesehen, das mit einem Gewindestutzen 130 in die Bohreraufnahme 3, die hierfür ein zu einem Außengewinde des Gewindestutzens 130 komplementäres Innengewinde aufweist, eingeschraubt werden kann. Das Adapterstück 110 ist unlösbar mit dem Bohrer 5 verbunden, insbesondere auf den Bohrer 5 aufgeschrumpft. Um den Bohrer 5 auszuwechseln, wird dieser mit dem Adapterstück 110 aus der Bohreraufnahme 3 ausgeschraubt, und gemeinsam mit dem Adapterstück 110 entsorgt. Es wird dann ein neuer Bohrer 5 mit einem neuen Adapterstück 110 in die Bohreraufnahme 3 eingeschraubt. Dies ist zum einen umständlich, weil auf jeden zu verwendenden Bohrer zunächst ein Adapterstück 110 aufgeschrumpft werden muss, und darüber hinaus materialaufwändig und teuer, da die Adapterstücke 110 zusammen mit den Bohrern 5 entsorgt werden.

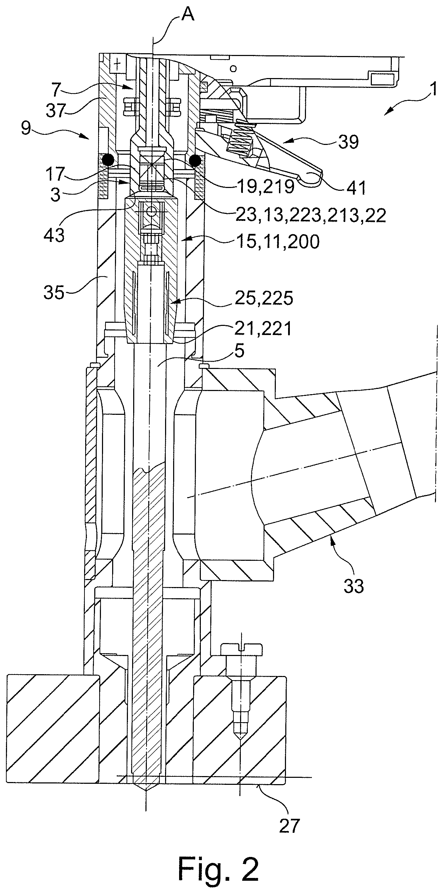

**Fig. 2** zeigt eine Detaildarstellung eines Ausführungsbeispiels einer Bohrvorschubeinheit 1. Gleiche und funktionsgleiche Elemente sind mit gleichen Bezugszeichen wie in Figur 1 bezeichnet, sodass insofern auf die dortige Beschreibung verwiesen wird. Bei dem erfindungsgemäßen Ausführungsbeispiel der Bohrvorschubeinheit 1 ist vorgesehen, dass die Bohreraufnahme 3 ein Wechselspannfutter 15 aufweist. Der Bohrer 5 ist dabei lösbar mit dem Wechselspannfutter 15 verbunden, insbesondere in dieses eingespannt, sodass es für einen Austausch des Bohrers 5 möglich ist, diesen aus dem Wechselspannfutter 15 zu entnehmen und damit von dem Wechselspannfutter 15 zu trennen, wobei anschließend ein neuer Bohrer 5 in das Wechselspannfutter 15 eingesetzt und dort eingespannt werden kann. Im Unterschied zu dem Adapterstück 110 ist es somit nicht mehr erforderlich, ein mit dem Bohrer 5 unlösbar verbundenes Teil gemeinsam mit diesem zu entsorgen. Dadurch entfällt der hiermit verbundene Material- und Kostenaufwand, sowie weiterhin der Zusatzaufwand, der dadurch entsteht, dass jedem neuen Bohrer 5 separat ein eigenes Adapterstück 110 zugeordnet und insbesondere umständlich auf diesen aufgeschrumpft werden muss.

Insbesondere weist die Bohreraufnahme 3 hier eine Zwischenstückaufnahme 17 und ein Zwischenstück 11 auf, wobei das Zwischenstück 11 eingerichtet ist, um mechanisch an einem ersten Ende 19 mit der Zwischenstückaufnahme 17 und mit einem zweiten, dem ersten Ende 19 entlang der Längsachse A gegenüberliegenden Ende 21 mit dem Bohrer 5 verbunden zu werden. Dabei ist hier das Zwischenstück 11 als Wechselspannfutter 15 zur lösbaren Befestigung des Bohrers 5 ausgebildet. Insbesondere ist das Zwischenstück 11 das Wechselspannfutter 15, oder anders ausgedrückt: Das Wechselspannfutter 15 bildet das Zwischenstück 11 oder ist identisch mit dem Zwischenstück 11.

Somit tritt das Zwischenstück 11 insbesondere in bevorzugter Weise an die Stelle des aus dem Stand der Technik bekannten Adapterstücks 110, wobei es jedoch lösbar mit dem Bohrer 5 verbindbar und dadurch wiederverwendbar ist.

Das Zwischenstück 11 weist bevorzugt ein Verbindungsstück 22, hier einen Gewindeverbinder 23 an dem ersten Ende 19 auf, wobei der Gewindeverbinder 23 eingerichtet ist zum Anschrauben des Zwischenstücks 11 an die Zwischenstückaufnahme 17. Der Gewindeverbinder 23 ist hier in bevorzugter Ausgestaltung als Gewindestutzen 13 ausgebildet. Insoweit ist in besonders bevorzugter Ausgestaltung der Gewindestutzen 13 analog zu dem Gewindestutzen 130 des bekannten Adapterstücks 110 ausgebildet und somit passend zu der Bohreraufnahme 3 einer im Übrigen bekannten Bohrvorschubeinheit 1 eingerichtet, sodass das Zwischenstück 11 und damit das Wechselspannfutter 15 auch bei bereits vorhandenen Bohrvorschubeinheiten 1 im Sinne einer Nachrüstlösung verwendet werden kann.

Alternativ zu einer Ausgestaltung als Gewindestutzen 13 mit einem Außengewinde kann der Gewindeverbinder 23 auch als Zylinderstutzen mit Innengewinde, oder in anderer geeigneter Weise ausgebildet sein. Selbstverständlich setzt dies eine entsprechende, komplementäre Ausgestaltung der Bohreraufnahme 3 oder das Vorsehen eines geeigneten Adapters voraus.

An dem zweiten Ende 21 weist das Zwischenstück 11 eine Spannaufnahme 25 zum lösbaren Einspannen des Bohrers 5 auf.

Die Funktionsweise einer solchen Bohrvorschubeinheit 1 ist bevorzugt folgende: An der Bohrvorschubeinheit 1 ist eine Anlagefläche 27 ausgebildet, die zum Anlegen der Bohrvorschubeinheit 1 an eine Werkstückoberfläche dient, um mit hoher Präzision eine Bohrung in das Werkstück einbringen zu können. Während des Herstellens der Bohrung bleibt die Anlagefläche 27 in ständigem Kontakt zu der Oberfläche des Werkstücks, während der Bohrer 5 durch die Vorschubeinrichtung 7 relativ zu dem Gehäuse 9 und damit zugleich auch relativ zu der Anlagefläche 27 verlagert wird. Anders als bei einer freihändigen und ohne Kontakt zu dem Werkstück geführten Bohrmaschine ist so eine genau ausgerichtete Einbringung der Bohrung möglich. Die Vorschubeinrichtung 7 ist vorzugsweise als pneumatische Vorschubeinrichtung ausgebildet, wobei ihr mit Bezug auf Figur 1 ein Pneumatikanschluss 29 zugeordnet ist. Zum Herstellen der Bohrung wird der Bohrer 5 in eine Rotationsbewegung um die Längsachse A versetzt, wobei insbesondere die Bohreraufnahme 3 in Rotation versetzt wird, wobei diese den Bohrer 5 mitnimmt. Der Bohreraufnahme 3 ist hierzu wiederum mit Bezug auf Figur 1 ein motorischer Antrieb 31 zugeordnet. Hierbei kann es sich ebenfalls um einen pneumatischen Antrieb handeln. Selbstverständlich sind aber andere Antriebskonzepte sowohl für den motorischen Antrieb 31 als auch für die Vorschubeinrichtung 7 möglich, beispielsweise ein elektrischer Antrieb, ein hydraulischer Antrieb, oder irgendeine andere Art eines geeigneten Antriebs. Insbesondere ist für zumindest eine der Bewegungsformen auch ein manueller Antrieb grundsätzlich denkbar. Das Gehäuse 9 weist außerdem noch einen Absauganschluss 33 auf, der mit einer hier nicht dargestellten Absaugeinrichtung strömungstechnisch verbunden werden kann, um Späne aus dem Bereich der entstehenden Bohrung abzusaugen. Die Späne werden dabei bevorzugt durch wenigstens einen entlang einer Schraubenlinie gewundenen Spanraum des Bohrers 5 aus der entstehenden Bohrung in Richtung des Absauganschluss 33 gefördert. Die Bohrvorschubeinheit 1 kann handgehalten oder an einem Roboterarm befestigt sein. Selbstverständlich sind auch andere Möglichkeiten zum Halten und/oder Führen der Bohrvorschubeinheit 1 möglich. eine solche Bohrvorschubeinheit 1 wird insbesondere im Flugzeugbau, dort bevorzugt zum Einbringen von Nietlochbohrungen, verwendet.

Das Gehäuse 9 nimmt hier die Bohreraufnahme 3 und die Vorschubeinrichtung 7 auf. Zugleich umschließt das Gehäuse 9 zumindest in dem in Figur 2 dargestellten zurückgezogenen Zustand des Bohrers 5 auch diesen jedenfalls weitgehend.

Nach einer bevorzugten Ausgestaltung der Erfindung ist das Zwischenstück 11 und damit das Wechselspannfutter 15 als Hydrodehnspannfutter in Übereinstimmung mit der Erfindung ausgebildet. Dabei ermöglicht insbesondere ein so ausgebildetes Hydrodehnspannfutter eine Verwendung auch bei beengtem Bauraum, wie ihn das Innere des Gehäuses 9 der Bohrvorschubeinheit 1 umfasst.

Alternativ und nicht im Rahmen der Erfindung, ist es möglich, dass das Zwischenstück 11 und damit auch das Wechselspannfutter 15 als anderes Hydrodehnspannfutter, als

Spannzange, als Polygonspannfutter, als Flächenspannfutter oder in anderer geeigneter Weise, insbesondere als anderes Spannfutter, ausgebildet ist.

Die Bohreraufnahme 3 ist bevorzugt zumindest bereichsweise in einem Gehäuseabschnitt 35 des Gehäuses 9 angeordnet. Der Gehäuseabschnitt 35 ist dabei insbesondere ein distaler Gehäuseabschnitt, das heißt ein Gehäuseabschnitt, der bestimmungsgemäß einem zu bearbeitenden Werkstück zugewandt ist. Insbesondere ist die Bohreraufnahme 3 in dem Gehäuseabschnitt 35 verlagerbar. Bevorzugt sind auch die Zwischenstückaufnahme 17 zumindest bereichsweise, sowie das Zwischenstück 11 und der Bohrer 5 in dem Gehäuseabschnitt 35 angeordnet, vorzugsweise in diesem verlagerbar. Der Gehäuseabschnitt 35 ist hier mit einem Obergehäuse 37 des Gehäuses 9 trennbar verbunden. Dabei kann der Gehäuseabschnitt 35 von dem Obergehäuse 37 getrennt werden, um den Bohrer 5 auszuwechseln. Die Vorschubeinrichtung 7 ist dabei insbesondere in dem Obergehäuse 37 angeordnet. Zum Trennen des Gehäuseabschnitts 35 von dem Obergehäuse 37 ist ein bei dem hier dargestellten Ausführungsbeispiel manuell betätigbarer Trennmechanismus 39 vorgesehen, mittels dem eine Verbindung zwischen dem Gehäuseabschnitt 35 und dem Obergehäuse 37 entriegelt werden kann, sodass der Gehäuseabschnitt 35 von dem Obergehäuse getrennt werden kann. Der Trennmechanismus 39 umfasst hier in besonders einfacher Ausgestaltung einen unter Federvorspannung in eine Verriegelungsposition gedrängten und entgegen der Federvorspannung in eine Entriegelungsposition verlagerbaren Fingerhebel 41, der in schneller und einfacher Weise durch einen Benutzer der Bohrvorschubeinheit 1 - insbesondere mit einem Finger - betätigt werden kann, ähnlich dem Abzug einer Faustfeuerwaffe.

Zum Wechseln des Bohrers 5 wird vorzugsweise zunächst das Wechselspannfutter 15 und damit das Zwischenstück 11 von der Bohreraufnahme 3 und damit von der Zwischenstückaufnahme 17 getrennt, insbesondere durch Ausschrauben, wobei das Wechselspannfutter 15 gemeinsam mit dem Bohrer 5 aus der Bohrvorschubeinheit 1 entnommen wird. Anschließend wird außerhalb der Bohrvorschubeinheit 1 der Bohrer 5 von dem Wechselspannfutter 15 gelöst. Anschließend wird ein neuer Bohrer 5 in das Wechselspannfutter 15 eingesetzt, insbesondere eingespannt. Anschließend wird das Wechselspannfutter 15 mit dem neuen Bohrer 5 wiederum an der Bohraufnahme 3 und zugleich an der Zwischenstückaufnahme 17 befestigt, insbesondere durch Anschrauben oder Einschrauben. In besonders bevorzugter Ausgestaltung wird zunächst der Gehäuseabschnitt 35 von dem Obergehäuse 37 getrennt, wodurch das Wechselspannfutter 5 zugänglich wird, sodass es von der Bohreraufnahme 3 gelöst werden kann. In getrenntem Zustand des Gehäuseabschnitts 35 von dem Obergehäuse 37 kann dann auch das Wechselspannfutter 15 mit dem neuen Bohrer 5 an der Bohreraufnahme 3 befestigt werden. Danach wird vorzugsweise der Gehäuseabschnitt 35 wieder an dem Obergehäuse 37 befestigt beziehungsweise mit dem Obergehäuse 37 verbunden.

Das Zwischenstück 11 weist ein maximales Breitenmaß, insbesondere einen maximalen Außendurchmesser, von mindestens 5 mm bis höchstens 40 mm, vorzugsweise von mindestens 7 mm bis höchstens 35 mm, vorzugsweise von mindestens 10 mm bis höchstens 30 mm, vorzugsweise von mindestens 15 mm bis höchstens 20 mm auf. Das Breitenmaß wird dabei insbesondere senkrecht zur Erstreckung der Längsachse A gemessen. Auf diese Weise ist das Zwischenstück 11 so dimensioniert, dass es in dem beengten Bauraum in Inneren des Gehäuses 9 der Bohrvorschubeinheit 1 eingesetzt werden kann.

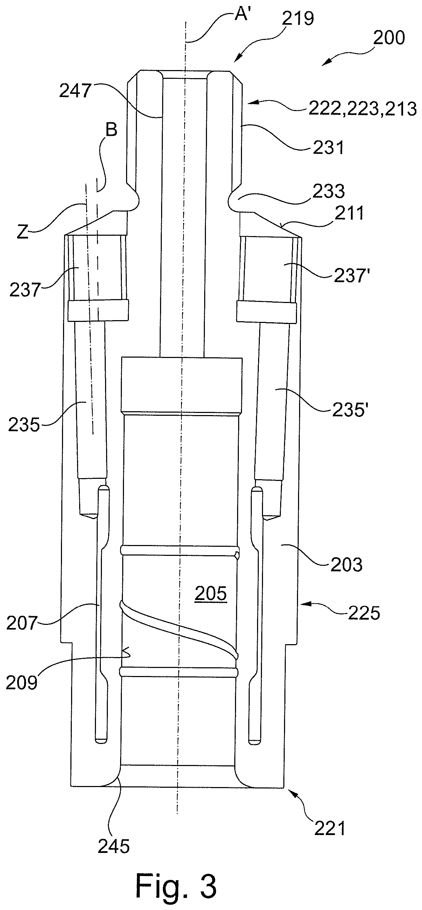

**Fig. 3** zeigt eine Darstellung eines Ausführungsbeispiels eines Hydrodehnspannfutters 200 im Längsschnitt. Das Hydrodehnspannfutter weist eine Spannaufnahme 225 zum lösbaren Einspannen eines Werkzeugs auf. Weiterhin weist das Hydrodehnspannfutter 200 ein senkrecht zu einer Längsachse A' gemessenes maximales Breitenmaß von mindestens 5 mm bis höchstens 40 mm, vorzugsweise von mindestens 7 mm bis höchstens 35 mm, vorzugsweise von mindestens 10 mm bis höchstens 30 mm, vorzugsweise von mindestens 15 mm bis höchstens 20 mm auf. Somit ist das Hydrodehnspannfutter 200 bezüglich seines maximalen Breitenmaßes sehr klein ausgebildet und damit auch in beengten Bauräumen einsetzbar. In bevorzugter Ausgestaltung ist das maximale Breitenmaß ein maximaler Außendurchmesser des Hydrodehnspannfutters 200. Die Längsachse A' erstreckt sich bevorzugt parallel zur Längsachse eines in die Spannaufnahme 225 eingesetzten Werkzeugs.

Das Hydrodehnspannfutter 200 ist insbesondere eingerichtet zur Verwendung als Wechselspannfutter 15 einer Bohrvorschubeinheit 1 gemäß der vorliegend offenbarten technischen Lehre. In bevorzugter Ausgestaltung ist das Wechselspannfutter 15 der Bohrvorschubeinheit 1, mithin auch das Zwischenstück 11, das hier offenbarte Hydrodehnspannfutter 200. In bevorzugter Ausgestaltung fluchtet die Längsachse A' des Hydrodehnspannfutters 200 mit der Längsachse A der Bohrvorschubeinheit 1 beziehungsweise fällt mit dieser zusammen, wenn das Hydrodehnspannfutter 200 in die Bohrvorschubeinheit 1 eingesetzt, insbesondere an der Bohreraufnahme 3, das heißt insbesondere der Zwischenstückaufnahme 17, als Zwischenstück 11 befestigt ist.

Das Hydrodehnspannfutter 200 und die Bohrvorschubeinheit 1 sind aber auch getrennt voneinander einsetzbar. Insbesondere ist das Hydrodehnspannfutter 200 bei anderen Anwendungen unabhängig von der Bohrvorschubeinheit 1 einsetzbar. Insbesondere ist die Bohrvorschubeinheit 1 mit einem anderen Wechselspannfutter verwendbar, unabhängig von dem Hydrodehnspannfutter 200.

Die Spannaufnahme 225 weist einen von einer Spannwandung 203 umschlossenen Spannraum 205 auf. Dabei ist in der Spannwandung 203 wenigstens eine Druckkammer 207 ausgebildet, die mit einem Druckfluid, insbesondere einem Drucköl befüllt werden kann, vorzugsweise befüllt ist. In einer ersten Funktionsstellung des Hydrodehnspannfutters 200 herrscht in der Druckkammer 207 ein erster Druck, bei dem eine Innenfläche 209 ausgehend von einer entspannten Position elastisch in den Spannraum 205 hinein verformt ist, wodurch ein bereichsweise in dem Spannraum 205 angeordnetes Werkzeug, insbesondere ein Bohrer, durch die verformte Innenfläche 209 gespannt werden kann. In einer zweiten Funktionsstellung des Hydrodehnspannfutters 200 herrscht in der Druckkammer 207 ein zweiter Druck, der kleiner ist als der erste Druck, bei welchem die Innenfläche 209 in ihrer entspannten Position angeordnet ist, sodass der lichte Innendurchmesser des Spannraums 205 größer ist als in der ersten Funktionsstellung, und das Werkzeug gelöst und somit aus dem Spannraum 205 entfernbar ist. Selbstverständlich ist analog ein neues Werkzeug in der zweiten Funktionsstellung in den Spannraum 205 einsetzbar, wobei es dann durch Verlagern des Hydrodehnspannfutters 200 aus der zweiten Funktionsstellung in die erste Funktionsstellung gespannt werden kann. Die grundsätzliche Funktionsweise eines solchen Hydrodehnspannfutters 200 ist für sich genommen bekannt, sodass hierauf nicht näher eingegangen wird.

Das Hydrodehnspannfutter 200 weist entlang seiner Längsachse A' der Spannaufnahme 225 abgewandt, insbesondere an einem ersten Ende 219, ein Verbindungsstück 222 zur mechanischen Verbindung mit einer Aufnahme für das Hydrodehnspannfutter 200, und außerdem eine Zentrierfläche 211 auf. Die Zentrierfläche 211 ist radial nach außen versetzt zu dem Verbindungsstück 222 angeordnet. Eine radiale Richtung steht dabei senkrecht auf der Längsachse A' des Hydrodehnspannfutters 200. Zugleich ist die Zentrierfläche 211 auch axial zu dem Verbindungsstück 222 versetzt, insbesondere in Richtung der Spannaufnahme 225 versetzt, angeordnet. Die Spannaufnahme 225 ist an einem dem ersten Ende 219 entlang der Längsachse A' gegenüberliegenden zweiten Ende 221 angeordnet.

Das Verbindungsstück 222 ist bevorzugt als Gewindeverbinder 223 ausgebildet. Der Gewindeverbinder 223 ist bevorzugt als Gewindestutzen 213 mit einem Außengewinde 231 ausgebildet. Alternativ kann der Gewindeverbinder 223 auch als Zylinderstutzen mit Innengewinde, oder in anderer geeigneter Weise ausgebildet sein. Auch kann das Verbindungsstück 222 auf andere geeignete Weise, beispielsweise als Einspannstummel oder in anderer geeigneter Form ausgebildet sein.

Die Zentrierfläche 211 ist als Kegelstumpffläche ausgebildet. Besonders bevorzugt ist sie komplementär zu einer Gegenzentrierfläche 43 der Bohreraufnahme 3, insbesondere der Zwischenstückaufnahme 17, der Bohrvorschubeinheit 1 ausgebildet, sodass das Hydrodehnspannfutter 200 an der Bohreraufnahme 3 zentriert wird, wenn die Zentrierfläche 211 insbesondere vollflächig an der Gegenzentrierfläche 43 anliegt. Das Verbindungsstück 222 dient insoweit zur axialen Festlegung des Hydrodehnspannfutters 200 an der Bohreraufnahme 3, wobei die Zentrierfläche 211 zur Ausrichtung und Zentrierung dient.

Die Gegenzentrierfläche 43 ist bevorzugt ebenfalls als Kegelstumpffläche eines Innenkegels ausgebildet. Die Zentrierfläche 211 ist entsprechend die Kegelstumpffläche eines Außenkegels.

Zur besseren Anlage und Zentrierung ist zwischen dem Verbindungsstück 222 und der Zentrierfläche 211 eine Freistellung 233 ausgebildet.

Die wenigstens eine Druckkammer 207 ist strömungstechnisch mit wenigstens einem Druckzylinder, hier mit zwei Druckzylindern 235, 235' verbunden. Eine Zylinderlängsachse Z des Druckzylinders 235 schließt dabei mit der Längsachse A' des Hydrodehnspannfutters 200 einen Winkel von mindestens 0° bis höchstens 3°, vorzugsweise von mindestens 1° bis höchstens 2°, vorzugsweise von 1,5° ein. Dies gilt bevorzugt für jeden Druckzylinder 235, 235', wobei insbesondere jede Zylinderlängsachse Z eines Druckzylinders 235, 235' denselben Winkel mit der Längsachse A' des Hydrodehnspannfutters 200 einschließt. Der besseren Übersichtlichkeit wegen ist hier nur eine Zylinderlängsachse Z für den in Figur 3 linken Druckzylinder 235 dargestellt. Durch diese Konfiguration der Druckzylinder 235', 235 kann das Hydrodehnspannfutter 200 gerade in der Richtung senkrecht zu seiner Längsachse A', also zu der Breitenrichtung, sehr kompakt und bauraumsparend ausgebildet sein.

In den Druckzylindern 235, 235' ist jeweils ein hier nicht dargestellter Druckkolben verlagerbar, wobei durch eine Verlagerung des Druckkolbens entlang der jeweiligen Zylinderlängsachse Z das Druckfluid in der Druckkammer 207, das zumindest teilweise auch in den Druckzylindern 235, 235' angeordnet ist, unter Druck gesetzt oder entspannt werden kann.

Jedem Druckzylinder 235, 235' ist hier eine Druckschraubbohrung 237, 237' zugeordnet. Die jeweilige Druckschraubbohrung 237, 237' ist mit dem ihr zugeordneten Druckzylinder 235, 235' zur Druckbeeinflussung eines Drucks des Druckfluids in dem Druckzylinder 235, 235' und damit zugleich auch in der Druckkammer 207 wirkverbunden. Insbesondere ist in der Druckschraubbohrung 237, 237' eine hier nicht dargestellte Druckschraube angeordnet, wobei durch Ein- oder Ausschrauben der Druckschraube der jeweilige Druckzylinder in Richtung der jeweiligen Zylinderlängsachse Z verlagerbar ist. Die Druckschraube ist dabei in bevorzugter Ausgestaltung als Madenschraube ausgebildet und weist bevorzugt einen Betätigungseingriff, insbesondere einen Innensechskant-Eingriff, auf.

Eine Bohrungslängsachse B der Druckschraubbohrung 237, 237' erstreckt sich parallel zu der Zylinderlängsachse Z des zugeordneten Druckzylinders 237, 237'. Alternativ oder zusätzlich, hier zusätzlich, ist die Bohrungslängsachse B senkrecht zu der Zylinderachse Z versetzt von dieser angeordnet, insbesondere radial nach innen in Richtung auf die Längsachse A' des Hydrodehnspannfutters 200 hin parallelversetzt. Dies erlaubt eine besonders bauraumsparende - insbesondere in Breitenrichtung - Ausgestaltung des Hydrodehnspannfutters 200. Insoweit ist relevant, dass die Druckschrauben typischerweise einen Durchmesser aufweisen, der größer ist als der Durchmesser der Druckkolben, sodass auch die Druckschraubbohrungen 237, 237' einen größeren Durchmesser aufweisen als Druckzylinder 235, 235'. Würden nun die Zylinderlängsachsen Z und die Bohrungslängsachsen B aufeinanderfallen, müsste in Breitenrichtung, also in radialer Richtung, mehr Bauraum für die Druckschraubbohrungen 237, 237' bereitgestellt werden. Eine Betätigung der Druckkolben durch die Druckschrauben ist aber auch möglich, wenn diese nicht relativ zu den Druckzylindern zentriert sind. Daher kann Bauraum in Breitenrichtung eingespart werden, indem die Druckschraubbohrungen 237, 237' relativ zu den Druckzylindern 235, 235' radial nach innen in Richtung auf die Längsachse A' des Hydrodehnspannfutters 200 zu versetzt angeordnet werden.

Weiterhin ist die Druckkammer 207 bevorzugt mit einer Mehrzahl von Druckzylindern 235, 235' strömungstechnisch verbunden. Die Volumenverdrängung und Druckerhöhung in der Druckkammer für die erste Funktionsstellung kann dann durch Verlagerung einer Mehrzahl von Druckkolben bewirkt werden, wodurch der axiale Verlagerungsweg für jeden einzelnen Druckkolben bei Erzielung einer gleichen Volumenverdrängung und letztlich Druckdifferenz geringer wird. Somit trägt auch die strömungstechnische Verbindung der Druckkammer 207 mit einer Mehrzahl von Druckzylindern 235, 235' zu einem besonders kleinen Bauraum für das Hydrodehnspannfutter 200 bei. Insbesondere kann das Hydrodehnspannfutter 200 so kürzer - und zugleich aufgrund des Winkels der Zylinderlängsachsen Z zu der Längsachse A' des Hydrodehnspannfutters 200 auch in Breitenrichtung kleiner - ausgestaltet werden, als dies der Fall wäre, wenn die Druckkammer 207 lediglich mit einem Druckzylinder 235, 235' strömungstechnisch verbunden wäre.

Die wenigstens eine Druckschraubbohrung 237, 237' mündet in bevorzugter Ausgestaltung in die Zentrierfläche 211. Dies ermöglicht einen besonders kompakten Bauraum für das Hydrodehnspannfutter 200. Zugleich zeigt sich, dass insbesondere bei der Verwendung des Hydrodehnspannfutters 200 als Wechselspannfutter 15, insbesondere als Zwischenstück 11, in einer Bohrvorschubeinheit 1 die Druckschraubbohrungen 237, 237' und damit zugleich die Druckschrauben nur zugänglich sind, wenn das Zwischenstück 11 von der Zwischenstückaufnahme 17 getrennt und damit zugleich die Zentrierfläche 211 von der Gegenzentrierfläche 43 getrennt ist. Daher wird bevorzugt zunächst der Bohrer 5 gemeinsam mit dem Zwischenstück 11 von der Zwischenstückaufnahme 17 getrennt, wobei anschließend der Bohrer 5 aus dem Wechselspannfutter 15, hier dem Hydrodehnspannfutter 200, gelöst wird. Es kann dann ein neuer Bohrer 5 in das Wechselspannfutter 15, hier das Hydrodehnspannfutter 200, eingespannt werden, wobei anschließend das Wechselspannfutter 15 gemeinsam mit dem Bohrer 5 wiederum an der Zwischenstückaufnahme 17 festgelegt und insbesondere über die Zentrierfläche 211 und die Gegenzentrierfläche 43 zentriert werden kann.

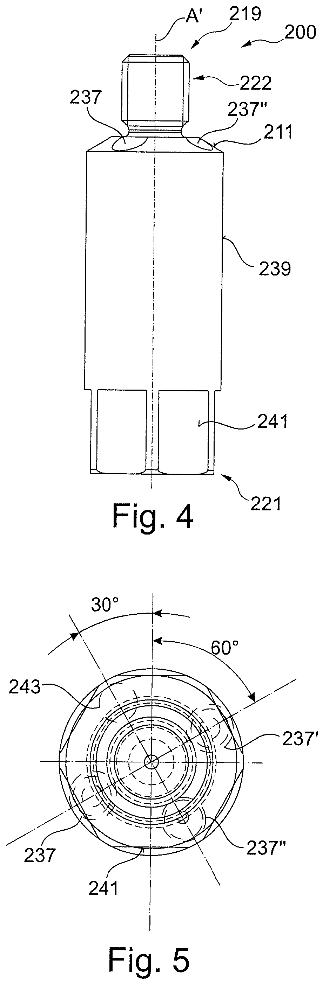

**Fig. 4** zeigt eine Seitenansicht des Hydrodehnspannfutters 200 gemäß Figur 3. Gleiche und funktionsgleiche Elemente sind in allen Figuren mit gleichen Bezugszeichen versehen, sodass jeweils insoweit auf die vorangegangene Beschreibung verwiesen wird. Das Hydrodehnspannfutter 200 weist bevorzugt eine zylindrische, insbesondere kreiszylindrische äußere Umfangsfläche 239 auf. Vorzugsweise ist das Hydrodehnspannfutter 200 vollzylindrisch ausgebildet, insbesondere bis auf den Bereich des Verbindungsstücks 222, von im Folgenden näher erläuterten Schlüsselflächen 241, von denen der besseren Übersichtlichkeit wegen nur eine mit dem Bezugszeichen 241 gekennzeichnet ist und bis auf die kegelförmige Zentrierfläche 211. Die Schlüsselflächen 241 dienen insbesondere dazu, dass ein Werkzeug, insbesondere ein Schlüssel, an dem Hydrodehnspannfutter 200 - insbesondere im Bereich des zweiten Endes 221 - angreifen kann, um das Hydrodehnspannfutter 200 mit dem Verbindungsstück 222 in eine Aufnahme für das Hydrodehnspannfutter 200, insbesondere in die Zwischenstückaufnahme 17 der Bohrvorschubeinheit 1, einzudrehen.

Das Hydrodehnspannfutter 200 weist bevorzugt mehr als zwei Druckzylinder 235, 235' und entsprechend auch mehr als zwei Druckschraubbohrung 237, 237', 237" auf, bei dem hier dargestellten Ausführungsbeispiel insbesondere drei Druckschraubbohrungen 237, 237', 237", die in die Zentrierfläche 211 münden.

**Fig. 5** zeigt eine Ansicht des Hydrodehnspannfutters 200 gemäß den Figuren 3 und 4 von unten. Dabei sind hier die drei Druckschraubbohrungen 237, 237', 237" erkennbar. Diese sind hier jeweils in einem Winkelabstand von 90° zueinander in drei Quadranten angeordnet. In dem vierten Quadranten ist entsprechend in einem Winkelabstand von jeweils 90° zu den unmittelbar benachbarten Druckschraubbohrungen 237, 237' eine Wuchtbohrung 243 angeordnet.

Erkennbar ist in Figur 5 auch die Schlüsselfläche 241, die in Figur 4 mit dem entsprechenden Bezugszeichen gekennzeichnet ist. Insgesamt ist anhand von Figur 5 erkennbar, dass das Hydrodehnspannfutter 2 sechs Schlüsselflächen 241 aufweist, die einen Außensechskant bilden.

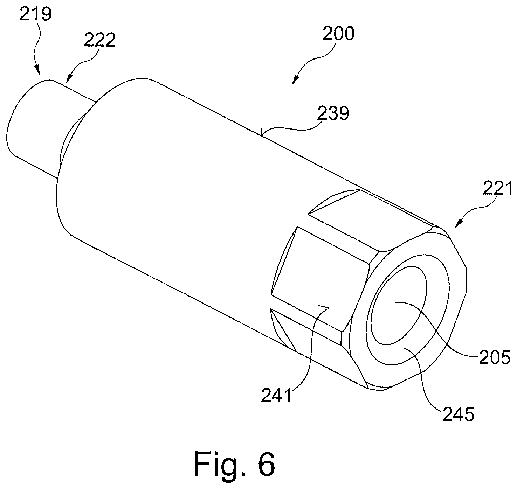

**Fig. 6** zeigt eine dreidimensionale Ansicht des Hydrodehnspannfutters 200 gemäß den Figuren 3 bis 5. Dabei sind hier gut der durch die Schlüsselflächen 241 gebildete Außensechskant erkennbar, sowie auch die zylindrische äußere Umfangsfläche 239. Weiterhin ist erkennbar, dass das Hydrodehnspannfutter 200 im Bereich des zweiten Endes 221 im Mündungsbereich zu dem Spannraum 205 eine Einführfase 245 aufweist, die auch als Einführrundung ausgebildet sein kann. Die Einführfase 245 oder Einführrundung erlaubt ein leichteres Einführen eines Werkstücks, insbesondere eines Bohrers 5, in den Spannraum 205.

Das Hydrodehnspannfutter 200 ist bevorzugt additiv gefertigt, besonders bevorzugt durch 3D-Drucken, insbesondere durch Laser-Sintern oder Laser-Strahlschmelzen. Auf diese Weise ist es besonders einfach möglich, das Hydrodehnspannfutter 200 mit seinen hier beschriebenen geometrischen Merkmalen auszubilden.

Mit Bezug auf Figur 3 weist das Hydrodehnspannfutter 200 bevorzugt noch einen Zentralkanal 247 auf, über den der Spannraum 205 von dem ersten Ende 219 her zugänglich ist, insbesondere durch das Verbindungsstück 222 hindurch. Dieser Zentralkanal 247 ist bevorzugt eingerichtet, um einen Kühl-/Schmiermittel-Transport zu einem in dem Spannraum 205 angeordneten Werkzeug zu erlauben.

## Patentansprüche

1. Hydrodehnspannfutter (200), mit
- einer Spannaufnahme (225) zum lösbaren Einspannen eines Werkzeugs, wobei
- die Spannaufnahme (225) einen von einer Spannwandung (203) umschlossenen Spannraum (205) aufweist, wobei in der Spannwandung (203) mindestens eine Druckkammer (207) angeordnet ist, wobei
- die Druckkammer (207) mit wenigstens einem Druckzylinder (235,235') des Hydrodehnspannfutters strömungstechnisch verbunden ist, wobei
- eine Zylinderlängsachse (Z) des wenigstens einen Druckzylinders (235,235') mit der Längsachse (A') des Hydrodehnspannfutters (200) einen Winkel einschließt, der von mindestens 0° bis höchstens 3° beträgt, wobei
- dem wenigstens einen Druckzylinder (235,235') eine Druckschraubbohrung (237,237',237") zugeordnet ist, wobei eine Bohrungslängsachse (B) der Druckschraubbohrung (237,237',237'')
a) parallel zur Zylinderlängsachse (Z) des Druckzylinders (235,235') ausgerichtet, und/oder
b) senkrecht zu der Zylinderlängsachse (Z) des Druckzylinders (235,235') von der Zylinderlängsachse (Z) versetzt
ist, wobei
- die Druckschraubbohrung (237,237',237") einen größeren Durchmesser aufweist als der Druckzylinder (235,235')
**dadurch gekennzeichnet, dass**
- das Hydrodehnspannfutter (200) senkrecht zu einer Längsachse (A') des Hydrodehnspannfutters (200) ein maximales Breitenmaß von mindestens 5 mm bis höchstens 40 mm aufweist, dass
- das Hydrodehnspannfutter (200) entlang der Längsachse (A') der Spannaufnahme (225) abgewandt ein Verbindungsstück (222) zur mechanischen Verbindung mit einer Aufnahme für das Hydrodehnspannfutter (200) und eine Zentrierfläche (211) aufweist, wobei die Zentrierfläche (211) radial nach außen versetzt zu dem Verbindungsstück (222) angeordnet ist, und dass
- die Zentrierfläche (211) als Kegelstumpffläche ausgebildet ist.

2. Hydrodehnspannfutter (200) nach Anspruch 1, **dadurch gekennzeichnet, dass** das Verbindungsstück (222) als Gewindeverbinder (223) ausgebildet ist

3. Hydrodehnspannfutter (200) nach einem der vorhergehenden Ansprüche, **dadurch gekennzeichnet, dass** der Winkel, den die Zylinderlängsachse (Z) des wenigstens einen Druckzylinders (235,235') mit der Längsachse (A') des Hydrodehnspannfutters (200) einschließt, von mindestens 1° bis höchstens 2°, vorzugsweise 1,5°, beträgt.

4. Hydrodehnspannfutter (200) nach einem der vorhergehenden Ansprüche, **dadurch gekennzeichnet, dass** das maximale Breitenmaß des Hydrodehnspannfutters (200) von mindestens 7 mm bis höchstens 35 mm, vorzugsweise von mindestens 10 mm bis höchstens 30 mm, vorzugsweise von mindestens 15 mm bis höchstens 20 mm beträgt.

5. Hydrodehnspannfutter (200) nach einem der vorhergehenden Ansprüche, **dadurch gekennzeichnet, dass** die Druckkammer (207) mit einer Mehrzahl von Druckzylindern (235,235') strömungstechnisch verbunden ist.

6. Hydrodehnspannfutter (200) nach einem der vorhergehenden Ansprüche, **dadurch gekennzeichnet, dass** die wenigstens eine Druckschraubbohrung (237,237',237") in die Zentrierfläche (211) mündet.

7. Bohrvorschubeinheit (1), mit
- einer Bohreraufnahme (3) zum Befestigen eines Bohrers (5) an der Bohrvorschubeinheit (1), und mit einer
- Vorschubeinrichtung (7) zur maschinellen Verlagerung der Bohreraufnahme (3) relativ zu einem Gehäuse (9) der Bohrvorschubeinheit (1) in Axialrichtung, wobei
- die Bohreraufnahme (3) ein Wechselspannfutter (15) zum lösbaren Befestigen des Bohrers (5) aufweist, **dadurch gekennzeichnet, dass**
- das Wechselspannfutter (15) ausgebildet ist als Hydrodehnspannfutter (200) nach einem der Ansprüche 1 bis 6.

8. Bohrvorschubeinheit (1) nach Anspruch 7, **dadurch gekennzeichnet, dass** die Bohreraufnahme (3) eine Zwischenstückaufnahme (17) und ein Zwischenstück (11) aufweist, wobei das Zwischenstück (11) eingerichtet ist, um mechanisch einenends mit der Zwischenstückaufnahme (17) und anderenends mit dem Bohrer (5) verbunden zu werden, wobei das Zwischenstück (11) als das Wechselspannfutter (15) zum lösbaren Befestigen des Bohrers (5) ausgebildet ist.

9. Bohrvorschubeinheit (1) nach einem der Ansprüche 7 oder 8, **dadurch gekennzeichnet, dass** das Zwischenstück (11) einenends ein Verbindungstück (22) zum mechanischen Verbinden mit der Zwischenstückaufnahme (17) und anderenends eine Spannaufnahme (25) zum lösbaren Einspannen des Bohrers (5) aufweist.

10. Bohrvorschubeinheit (1) nach einem der Ansprüche 7 bis 9, **dadurch gekennzeichnet, dass** die Bohreraufnahme (3) zumindest bereichsweise in einem Gehäuseabschnitt (35) des Gehäuses (9) angeordnet, vorzugsweise in dem Gehäuseabschnitt (35) verlagerbar ist.

11. Bohrvorschubeinheit (1) nach einem der Ansprüche 7 bis 10, **dadurch gekennzeichnet, dass** das Wechselspannfutter (15) ein maximales Breitenmaß von mindestens 7 mm bis höchstens 35 mm, vorzugsweise von mindestens 10 mm bis höchstens 30 mm, vorzugsweise von mindestens 15 mm bis höchstens 20 mm, aufweist.

12. Bohrvorschubeinheit (1) nach einem der Ansprüche 7 bis 11, **dadurch gekennzeichnet, dass** der Gehäuseabschnitt (35) mit einem Obergehäuse (37) trennbar verbunden ist, wobei der Gehäuseabschnitt (35) von dem Obergehäuse (37) getrennt werden kann, um den Bohrer (5) auszuwechseln.

## Claims

1. Hydro expansion clamping chuck (200), with
- a clamping receptacle (225) for releasably clamping a tool, wherein
- the clamping receptacle (225) comprises a clamping space (205) enclosed by a clamping wall (203), wherein at least one pressure chamber (207) is arranged in the clamping wall (203), wherein
- the pressure chamber (207) is fluidically connected to at least one pressure cylinder (235, 235') of the hydro expansion clamping chuck, wherein
- a cylinder longitudinal axis (Z) of the at least one pressure cylinder (235, 235') forms an angle with the longitudinal axis (A') of the hydro expansion clamping chuck (200) which is at least 0° and at most 3°, wherein
- a pressure screw hole (237, 237', 237") is assigned to the at least one pressure cylinder (235, 235'), wherein a borehole longitudinal axis (B) of the pressure screw hole (237, 237', 237") is
a) parallel oriented to the cylinder longitudinal axis (Z) of the pressure cylinder (235, 235'), and/or
b) offset from the cylinder longitudinal axis (Z) in a direction perpendicular to the cylinder longitudinal axis (Z) of the pressure cylinder (235, 235'),
wherein
- the pressure screw hole (237, 237', 237") comprises a larger diameter than the pressure cylinder (235, 235').
**characterized in that**
- the hydro expansion clamping chuck (200) comprises a maximum width dimension of at least 5 mm to at most 40 mm perpendicular to a longitudinal axis (A') of the hydro expansion clamping chuck (200), that
- the hydro expansion clamping chuck (200) comprises, along the longitudinal axis (A') of the clamping receptacle (225) facing away from the clamping receptacle (225), a connection piece (222) for mechanical connection to a receptacle for the hydro expansion clamping chuck (200) and a centering area (211), wherein the centering area (211) is arranged radially outwardly offset relative to the connection piece (222), and that
- the centering area (211) is configured as a truncated cone area.

2. Hydro expansion clamping chuck (200) according to claim 1, **characterized in that** the connection piece (222) is configured as a threaded connector (223).

3. Hydro expansion clamping chuck (200) according to one of the preceding claims, **characterized in that** the angle which the cylinder longitudinal axis (Z) of the at least one pressure cylinder (235, 235') encloses with the longitudinal axis (A') of the hydro expansion clamping chuck (200) is from at least 1° to at most 2°, preferably 1.5°.

4. Hydro expansion clamping chuck (200) according to one of the preceding claims, **characterized in that** the maximum width dimension of the hydro expansion clamping chuck (200) is from at least 7 mm to at most 35 mm, preferably from at least 10 mm to at most 30 mm, preferably from at least 15 mm to at most 20 mm.

5. Hydro expansion clamping chuck (200) according to one of the preceding claims, **characterized in that** the pressure chamber (207) is fluidically connected to a plurality of pressure cylinders (235, 235').

6. Hydro expansion clamping chuck (200) according to one of the preceding claims, **characterized in that** the at least one pressure screw hole (237, 237', 237") opens into the centering area (211).

7. Drill feed unit (1), with
- a drill bit receptacle (3) for fastening a drill bit (5) to the drill feed unit (1), and with a
- feed device (7) for mechanically displacing the drill bit receptacle (3) relative to a housing (9) of the drill feed unit (1) in axial direction, wherein
- the drill bit receptacle (3) comprises an interchangeable clamping chuck (15) for releasably fastening the drill bit (5), **characterized in that**
- the interchangeable clamping chuck (15) is configured as a hydro expansion clamping chuck (200) according to one of the claims 1 to 6.

8. Drill feed unit (1) according to claim 7, **characterized in that** the drill bit receptacle (3) comprises an intermediate piece receptacle (17) and an intermediate piece (11), wherein the intermediate piece (11) is adapted to be mechanically connected at one end to the intermediate piece receptacle (17) and at the other end to the drill bit (5), wherein the intermediate piece (11) is configured as the interchangeable clamping chuck (15) for releasably fastening the drill bit (5).

9. Drill feed unit (1) according to one of the claims 7 or 8, **characterized in that** the intermediate piece (11) comprises a connecting piece (22) at one end for mechanical connection to the intermediate piece receptacle (17) and a clamping receptacle (25) at the other end for releasable clamping of the drill bit (5).

10. Drill feed unit (1) according to one of the claims 7 to 9, **characterized in that** the drill bit receptacle (3) is arranged at least in regions in a housing portion (35) of the housing (9), preferably is displaceable in the housing portion (35).

11. Drill feed unit (1) according to one of claims 7 to 10, **characterized in that** the interchangeable clamping chuck (15) has a maximum width dimension of at least 7 mm to at most 35 mm, preferably of at least 10 mm to at most 30 mm, preferably of at least 15 mm to at most 20 mm.

12. Drill feed unit (1) according to one of claims 7 to 11, **characterized in that** the housing portion (35) is separably connected to an upper housing (37), wherein the housing portion (35) can be separated from the upper housing (37) in order to replace the drill bit (5).

## Revendications

1. Mandrin de serrage hydraulique (200) avec
- un logement de serrage (225) pour enserrer un outil de façon amovible, dans lequel
- le logement de serrage (225) comporte un espace de serrage (205) entouré d'une paroi de serrage (203), au moins une chambre de pression (207) étant disposée dans la paroi de serrage (203),
- la chambre de pression (207) est liée à au moins un vérin (235, 235') du mandrin de serrage hydraulique en communication fluidique,
- un axe de cylindre (Z) de l'au moins un vérin (235, 235') inclut un angle avec l'axe longitudinal (A') du mandrin de serrage hydraulique (200) égal à au moins 0° et au plus à 3°,
- est assigné à l'au moins un mandrin (235, 235') un orifice pour vis de pression (237, 237', 237"), un axe longitudinal (B) d'orifice de l'orifice pour vis de pression (237, 237', 237")
a) étant aligné sur l'axe longitudinal de cylindre (Z) du mandrin (235, 235'), et/ou
b) étant décalé perpendiculairement à l'axe longitudinal de cylindre (Z) du mandrin (235, 235') par rapport à l'axe longitudinal de cylindre (Z),
- l'orifice pour vis de pression (237, 237', 237") présentant un plus grand diamètre que le mandrin (235, 235')
**caractérisé en ce que**
- le mandrin de serrage hydraulique (200) présente perpendiculaire à un axe longitudinal (A') du mandrin de serrage hydraulique (200) une largeur maximale d'au moins 5 mm à au plus 40 mm,
- le mandrin de serrage hydraulique (200) présente le long de l'axe longitudinal (A'), à l'écart du logement de serrage (225), une pièce de liaison (222) pour assurer la liaison mécanique avec le logement pour le mandrin de serrage hydraulique (200) et une surface de centrage (211), la surface de centrage (211) étant disposée décalée vers la pièce de liaison (222) radialement vers l'extérieur, et
- la surface de centrage (211) est conçue comme une surface de base de cône.

2. Mandrin de serrage hydraulique (200) selon la revendication 1, **caractérisé en ce que** la pièce de liaison (222) est conçue comme un connecteur fileté (223).

3. Mandrin de serrage hydraulique (200) selon l'une des revendications précédentes, **caractérisé en ce que** l'angle formé par l'axe longitudinal de cylindre (Z) de l'au moins un vérin (235, 235') avec l'axe longitudinal (A') du mandrin de serrage hydraulique (200) est égal à au moins 1° et au plus à 2°, de préférence 1,5°.

4. Mandrin de serrage hydraulique (200) selon l'une des revendications précédentes, **caractérisé en ce que** la largeur maximale du mandrin de serrage hydraulique (200) est d'au moins 7 mm à au plus 35 mm, de préférence d'au moins 10 mm à au plus 30 mm, de préférence d'au moins 15 mm à au plus 20 mm.

5. Mandrin de serrage hydraulique (200) selon l'une des revendications précédentes, **caractérisé en ce que** la chambre de pression (207) est liée fluidiquement à une pluralité de vérins (235, 235').

6. Mandrin de serrage hydraulique (200) selon l'une des revendications précédentes, **caractérisé en ce que** l'au moins un orifice pour vis de pression (237, 237', 237") débouche dans la zone de centrage (211).

7. Unité d'avance de forage (1), avec
- un logement de trépan (3) pour fixer un trépan (5) à l'unité d'avance de forage (1), et avec
- un dispositif d'avancée (7) pour le déplacement mécanique du logement de trépan (3) par rapport à un carter (9) de l'unité d'avance de forage (1) en direction axiale, dans laquelle
- le logement de trépan (3) présente un mandrin de serrage de rechange (15) pour fixer le trépan (5) de façon amovible, **caractérisé en ce que**
- le mandrin de serrage de rechange (15) est conçu comme un mandrin de serrage hydraulique (200) selon l'une des revendications 1 à 6.

8. Unité d'avance de forage (1) selon la revendication 7, **caractérisée en ce que** le logement de trépan (3) présente un logement pour pièce de raccord (17) et une pièce de raccord (11), la pièce de raccord (11) étant conçue pour être liée mécaniquement à une extrémité au logement pour pièce de raccord (17) et à l'autre extrémité au trépan (5), la pièce de raccord (11) étant formée comme un mandrin de serrage de rechange (15) pour fixer le trépan (5) de façon amovible.

9. Unité d'avance de forage (1) selon la revendication 7 ou 8, **caractérisée en ce que** la pièce de raccord (11) présente à une extrémité une pièce de raccordement (22) pour assurer la liaison mécanique avec le logement pour pièce de raccord (17) et à l'autre extrémité un logement de serrage (25) pour enserrer le trépan (5) de façon amovible.

10. Unité d'avance de forage (1) selon l'une des revendications 7 à 9, **caractérisée en ce que** le logement de trépan (3) est disposé au moins partiellement dans une section de carter (35) du carter (9), de préférence déplaçable dans la section de carter (35).

11. Unité d'avance de forage (1) selon l'une des revendications 7 à 10, **caractérisée en ce que** le mandrin de serrage de rechange (15) présente une largeur maximale d'au moins 7 mm à au plus 35 mm, de préférence d'au moins 10 mm à au plus 30 mm, de préférence d'au moins 15 mm à au plus 20 mm.

12. Unité d'avance de forage (1) selon l'une des revendications 7 à 11, **caractérisée en ce que** la section de carter (35) est liée de façon séparable à un carter supérieur (37), la section de carter (35) pouvant être séparée du carter supérieur (37) pour changer de trépan (5).
